# EUROPEAN PATENT APPLICATION

(11) **EP 3 680 868 A1**
(43) Date of publication of application: **15.07.2020**
(21) Application number: 19218454.7
(22) Date of filing: 20.12.2019
(51) Int. Cl.: G07F 17/24, G06Q 20/34, G07B 15/02, G06Q 30/00, G06Q 20/08

(54) **PARKING METER**

(30) Priority: 10.01.2019 IT 201900000406
(71) Applicant: Flowbird Italia Srl, 20141 Milano (IT)
(72) Inventor: MAGGIONI, Vezio, 20141 Milano (IT)
(74) Representative: Vanosi, Adelio Valeriano

(57) **Abstract**

A parking meter (2), comprising a video terminal (8), at least one peripheral device for inputting data (8, 7, 5), a payment card reader (6), a network communication terminal (10), and a control unit (100) which interfaces with the peripheral units of the parking meter, characterised by the fact that the control unit is configured to:
- acquire a desired payment type (S1, S2, S3) inputted by a user and chosen from a list of preset types comprising at least one payment type other than parking payment (S2), and identify (CAPS) a purchaser code (cal, ca2, ca3,...) pre-associated with the payment type acquired (S1, S2, S3),
- on the basis of the payment type acquired, enable a payment method (4, 6), and read the data required for the payment,
- send a bank data processor (PG) the purchaser code (cal, ca2, ca3,...), the amount paid, and the data required for the payment, so that the bank data processor (PG):
- checks the payment authorisation on the basis of the relevant data;
- identifies, on the basis of the purchaser code (cal, ca2, ca3,...), an arrangement code (cc1, cc2, cc3,...) which is univocally associated with a single bank account (C1, C2, C3,...) and
- instructs a payment service provider (A) to credit the amount paid to the bank account (C1, C2, C3,...) associated with the arrangement code (cc1, cc2, cc3,...), and
- once the transaction has been completed successfully, the video terminal (8) displays a confirmation message that the transaction has been completed successfully and/or that a printer (3) has issued a receipt or a proof of entitlement following payment.

## Description

### FIELD OF THE INVENTION

The present invention relates to a parking payment machine or parking meter and to a method for the operation thereof.

In particular, it relates to a parking payment machine (commonly known as a "parking meter") whereby a user may pay (generally in advance) for parking within a designated vehicle parking zone.

### BACKGROUND ART

As is known, over recent years, the parking meters have become extremely widespread nationally. This is mainly due to extensive regulation of paid parking implemented by many town and city councils and service providers.

Nowadays, parking meters are somewhat sophisticated devices that comprise parking payment means which are more than simply coin collection units. Indeed, over recent years, it has become increasingly common to pay for parking using credit cards, prepaid cards, and payment services such as Fastpay and the like, and therefore parking meters have evolved accordingly in order to process also the aforesaid parking payment methods.

### SUMMARY OF THE INVENTION

Object of the present invention is to provide a parking payment machine that is able to process different types of payments contemporaneously.

A further object of the invention is to process different payment methods, directing each payment to a dedicated bank account.

This and other objects are achieved by means of a parking payment machine according to the technical teachings of the claims annexed hereto.

### BRIEF DESCRIPTION OF THE FIGURES

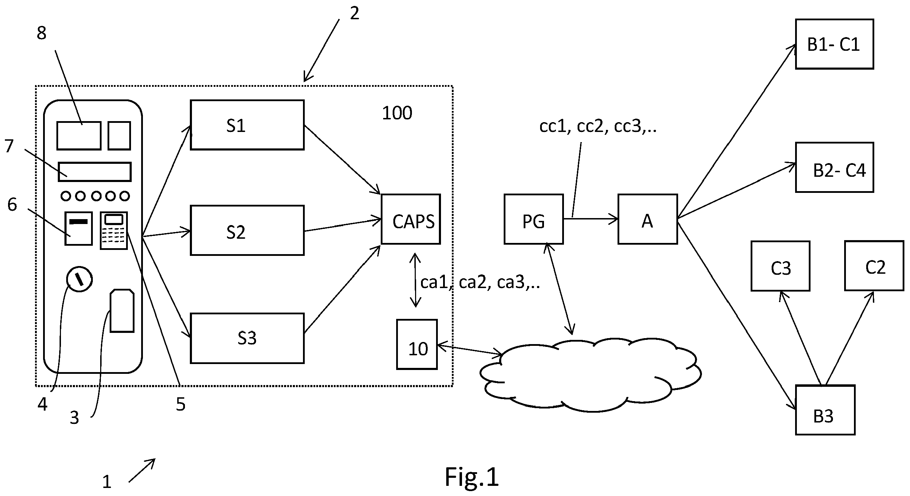

Further characteristics and advantages of the innovation will become clearer in the description of a preferred but not exclusive embodiment of the invention, illustrated - by way of a non-limiting example - in the sole drawing annexed hereto, which shows - schematically - a payment system using a parking payment machine.

### DETAILED DESCRIPTION OF THE INVENTION

With reference to the figure stated, reference number 2 is used to denote, as a whole, a parking payment machine.

The parking payment machine 2, or parking meter 2 (which may also be known by other names, such as parking payment device or parking payment station), comprises a frame firmly fixed to the ground, for example to the a pavement or at the side of the road, near a paid parking area.

After parking their car (or other vehicle) in the parking area, a user goes to the parking meter 2 and proceeds by paying for the parking to the payment in advance, inserting coins into a collection unit 4 for the amount of time they intend to park. Upon reaching the desired amount, the user presses a button and a dedicated printer 3 prints out a parking ticket showing when the park time ends. The ticket must be displayed on the car dashboard so that it is clearly visible in the event of checks.

The money paid for parking is appropriately stored inside the machine and collected at regular intervals by personnel of either the parking area owners or the concession holders (town/city council, transport company, etc).

Advantageously, the machine 2 may also feature a display 8 (possibly of the touchscreen variety) for displaying the parking data.

The machine may also feature a hardware keypad 7 for inputting, for example, the car license plate number or other relevant information. Obviously, the keyboard may also be of the virtual kind, integrated into the touchscreen.

The parking payment machine 2 may also feature different payment means, apart from the coin collection unit 4.

For example, the said machine may feature a payment card reader 6, which may be of the wireless kind and which may be associated with a conventional number pad 5 for keying in the card PIN (if necessary). Obviously, the number pad 5 may feature its own display unit.

There may also be Fastpay payment system featured (allowing for the use of bank cards associated with the Fastpay circuit).

For credit card payments, the machine 2 is equipped with a network communication terminal 10 for the connection to the Internet 200 (or to a private data network), the said terminal being designed to interface with a control unit 100 for controlling the said machine via the network. Preferably, the communication network 10 is a 3G/4G network terminal (or, in the future, a 4.5G or 5G network terminal), but it may also comprise a wired or wi-fi network interface, a data interface on a mobile telephone network, or another known data communication system, depending on the situation.

More specifically, when parking needs to be paid for, after the reader 6 has read (possibly via a wireless method) the data on the payment card and has confirmed the payment amount, the control unit 100 communicates the data needed for the payment to the bank data processor PG (for example SIA s.p.a.) via the terminal 10. The bank data processor, via a payment service provider, proceeds by crediting the amount paid for the parking to the designated bank account.

According to the present invention, the parking payment machine 2 allows the clients (parking service providers, local government, etc) to provide different kinds of services via parking meters (payment for parking or of fines, transport tickets ...), with different payment methods and payments credited to different bank accounts depending on the type of service provided.

Regarding this, the control unit 100 (which interfaces with the peripheral units of the machine 2), is configured to:
- acquire a desired payment type S1, S2, S3 inputted by a user and chosen from a list of preset types comprising at least one payment type other than parking payment, and identify (CAPS) a purchaser code which is pre-associated with the payment type acquired S1, S2, S3.

For example, the user may use the virtual (or hardware) keyboard to select a desired payment type.

The preset payment types S1, S2, S3 may comprise payment for parking (S2), and one or more of the following types: payment of fines (S1), payment of taxes, payment of local taxes, payment for public transport tickets (S3), payment for services provided by local councils, payment of bills.

Furthermore, on the basis of the payment type acquired (chosen, therefore, by the user), the control unit can enable a payment method 4, 6, and read the data required for the payment.

For example, the control unit 100 may be programmed to accept payment of a fine (S1) by payment cards only, and not through the coin collection unit. Therefore, in the event that the user selects the fine payment option, only the card reader 6 will be enabled.

The card data needed for the payment is then read (by the reader 6) .

The optional data relating to fine (for example, fine number, payer's name etc) are inputted via either the touchscreen or the keyboard. Such data may also be inputted via other peripheral input units, such as, for example, a barcode reader, a QR code reader etc.

Essentially, the control unit 100 acquires all the data relating to the payment to be made and the data of the card (or other payment system) needed to proceed therewith.

Furthermore, each payment type S1, S2, S3, is associated (for example in the memory of the control unit 100, or in a database in network) with a purchaser code (ca1, ca2, ca3,...).

After collecting all the information described above, the control unit 100 sends to a bank data processor PG (via the interface 10 for example) the purchaser code (ca1, ca2, ca3,...), the amount paid, and the data required for the payment, and -where envisaged - other optional data.

In the event (as in the case set out above) of payment of a fine, which corresponds to payment type S1, the control unit sends the bank data processor PG the purchaser code ca1, together with the other payment data.

The bank data processor PG therefore proceeds to:
- check the payment authorisation on the basis of the relevant data;
- identify - on the basis of the purchaser code received - an arrangement code (cc1, cc2, cc3,...) which is univocally associated with a single bank account (C1, C2, C3,...) and
- instruct a payment service provider (A) to credit the amount paid to the bank account (C1, C2, C3,...) associated with the arrangement code (cc1, cc2, cc3,...).

In the example described, the purchaser code ca1 (for the payment of fines S1) corresponds to the arrangement code cc1, associated with the bank account C1, held with the bank B1.

Obviously, the bank accounts associated with the different arrangement codes, may be held with different banks B1, B2, B3. Or various bank accounts C2, C3, may be held with the same bank B3. Each arrangement code (cc1, cc2, cc3) allows the system to direct the amount to a single bank account held with the desired bank.

Once the transaction has been completed successfully, the video terminal 8 can display a confirmation message that the transaction has been completed successfully.

It is also possible for a fine payment receipt to be printed out (or, in any case, a receipt for the transaction requested).

The method described above is carried out in a similar way for other types of payments, such as, for example, payment for a transport public ticket (option S3).

In this case, the control unit 100 will send the bank data processor PG a different purchaser code (ca3) from the previous one (linked to another arrangement code cc3 and therefore to another bank account, in other words bank account C3, held with bank B3) and, once the transaction has been completed, the printer 3 can print out a proof of entitlement, such as a ticket.

In the example set out above, payment card is used for the payment, but obviously the machine 2 may feature other means, such as credit or debit cards, prepaid card, Fastpay circuit payment cards, etc.

In Italy and in Europe, a bank data processor PG may be, for example, SIA s.p.a. while a payment service provider A may be, for example, Mercury/Bank Intesa.

Advantageously, every single entity - for example the TOWN/CITY COUNCIL 1, may be assigned several purchaser codes ca1, ca2, ca,... and every purchaser code may refer to a different bank account C1, C2, C3 (including accounts held with different banks B1, B2, B3).

For example, TOWN/CITY COUNCIL 1 may hold three bank accounts all in its own name. The three accounts may be, for example, C2 (assigned to car park payments), C1 (assigned to fine payments), C3 (assigned to the public transport ticket payments). For example, bank accounts C2 and C3 may both be held with the same bank B3.

Each bank account is associated with an arrangement code (cc1, cc2, cc3) that refers to a purchaser code, for example: ca2 (town/city 1, car park payments, arrangement code cc2), ca1 (town/city 1, fine payments, arrangement code cc1), ca3 (town/city 1, public transport ticket payments, arrangement code cc3).

Each purchaser code (ca1, ca2, ca3) refers to a different payment type (S1, S2, S3), connecting the payment type therefore to a different arrangement code (cc1, cc2, cc3) and therefore to a different bank account (C1, C2, C3).

For example, payment option S1 (selectable by the user for the payment of fines) refers to purchaser code ca1, which is connected to arrangement code cc1 and therefore to bank account C1.

Payment option S2 (for parking payments) refers to purchaser code ca2, which is connected to arrangement code cc2, and therefore linked to bank account C2 held with bank B3.

Payment option S3 (for public transport ticket payments) refers to purchaser code ca3, which is connected to arrangement code cc3 and therefore linked to bank account C3, held with bank B3, and so on.

It has been shown that a parking payment machine such as that described here is able to allow a sum to be automatically credited to a bank account dedicated to payments for services other than just parking.

Various embodiments of the innovation have been disclosed herein, but further embodiments may also be conceived using the same innovative concept.

## Claims

1. A parking meter (2), comprising a video terminal (8), at least one peripheral device for inputting data (8, 7, 5), a payment card reader (6), a network communication terminal (10), and a control unit (100) which interfaces with the peripheral units of the parking meter (2), **characterised by** the fact that the control unit is configured to:
- acquire a desired payment type (S1, S2, S3) inputted by a user and chosen from a list of preset types comprising at least one payment type other than parking payment (S2) and identify (CAPS) a purchaser code (ca1, ca2, ca3,...) pre-associated with the payment type acquired (S1, S2, S3),
- on the basis of the payment type acquired, enable a payment method (4, 6), and read the data required for the payment,
- send to a bank data processor (PG) the purchaser code (ca1, ca2, ca3,...), the amount paid, and the data required for the payment, so that the bank data processor (PG):
- checks the payment authorisation on the basis of the relevant data;
- identifies, on the basis of the purchaser code (ca1, ca2, ca3,...), an arrangement code (cc1, cc2, cc3,...) which is univocally associated with a single bank account (C1, C2, C3,...) and
- instructs a payment service provider (A) to credit the amount paid to the bank account (C1, C2, C3,...) associated with the arrangement code (cc1, cc2, cc3,...), and
- once the transaction has been completed successfully, the video terminal (8) displays a confirmation message that the transaction has been completed successfully and/or that a printer (3) has issued a receipt or a proof of entitlement following payment.

2. A parking meter (2) according to Claim 1, wherein the payment method comprises one or more of the following payments means: payment card, credit card, debit card, prepaid card, Fastpay.

3. A parking meter (2) according to Claim 1, wherein the payment service provider (A) comprises Mercury/Bank Intesa and/or SIA-Fastpay, and/or wherein the bank data processor (PG) comprises SIA S.p.a.

4. A parking meter (2) according to Claim 1, wherein the receipt or the entitlement is a public transport ticket and/or a receipt for payment of a fine, and/or a receipt for the payment of a tax.

5. A parking meter (2) according to Claim 1, wherein an individual entity may be assigned several purchaser codes (ca1, ca2, ca3,...), each one of which is associated with a different bank account, the bank accounts associated with the purchaser codes assigned to the said individual entity being preferably held in the name of the said individual entity.

6. A parking meter (2) according to Claim 1, wherein the preset payment types (S1, S2, S3) comprise at least payment for parking (S2), and one or more of the following types: payment of fines (S1), payment of taxes, payment of local taxes, payment for public transport tickets (S3), payment for local services, payment of bills.

7. A parking meter (2) according to Claim 1, wherein the peripheral device for inputting data (8, 7, 5) comprises one or more of the following devices: a touchscreen, a number pad, a keyboard.

8. A parking meter (2) according to Claim 1, wherein the payment card reader (6) comprises a wireless reading system.

9. A parking meter (2) according to Claim 1, wherein the network communication terminal (10) comprises a wired and/or wi-fi network interface and/or a data interface based on a mobile telephone network.

10. A method for the operation of a parking meter (2), comprising a video terminal (8), at least one peripheral device for inputting data (8, 7, 5), a payment card reader (6), a network communication terminal (10), and a control unit (100) which interfaces with the peripheral units of the parking meter (2), **characterised by** the fact that the control unit is configured to:
- acquire a desired payment type (S1, S2, S3) inputted by a user and chosen from a list of preset types comprising at least one payment type other than parking payment (S2), and identify (CAPS) a purchaser code (ca1, ca2, ca3,...) pre-associated with the payment type acquired (S1, S2, S3),
- on the basis of the payment type acquired, enable a payment method (4, 6), and read the data required for the payment,
- send a bank data processor (PG) the purchaser code (ca1, ca2, ca3,...), the amount paid, and the data required for the payment, so that the bank data processor (PG):
- checks the payment authorisation on the basis of the relevant data;
- identifies, on the basis of the purchaser code (ca1, ca2, ca3,...), an arrangement code (cc1, cc2, cc3,...) which is univocally associated with a single bank account (C1, C2, C3,...) and
- instructs a payment service provider (A) to credit the amount paid to the bank account (C1, C2, C3,...) associated with the arrangement code (cc1, cc2, cc3,...), and
- once the transaction has been completed successfully, the video terminal (8) displays a confirmation message that the transaction has been completed successfully and/or that a printer (3) has issued a receipt or a proof of entitlement following payment.
